(19)

Europäisches
Patentamt
European
Patent Office
Office européen
des brevets

(11) **EP 1 234 717 B1**

(12) **EUROPEAN PATENT SPECIFICATION**

(45) Date of publication and mention
of the grant of the patent:
**07.03.2007 Bulletin 2007/10**

(51) Int Cl.:
**B60Q 1/08** (2006.01) **B60Q 1/12** (2006.01)

(21) Application number: **01305609.8**

(22) Date of filing: **27.06.2001**

(54) **A headlight system preferably for motor vehicles**

Scheinwerfereinrichtung für Fahrzeuge

Dispositif pour phare de véhicule

(84) Designated Contracting States:
**DE ES FR GB IT**

(30) Priority: **21.02.2001 CZ 20010652**

(43) Date of publication of application:
**28.08.2002 Bulletin 2002/35**

(73) Proprietor: **Visteon-Autopal, s.r.o.**
**741 01 Novy Jicin (CZ)**

(72) Inventor: **Cejnek, Milan**
**Novy Jicin 741 01 (CZ)**

(74) Representative: **Godwin, Edgar James**
**Marks & Clerk**
**90 Long Acre**
**London WC2E 9RA (GB)**

(56) References cited:
**EP-A- 0 780 823**      **EP-A- 1 142 758**
**EP-A- 1 157 888**      **US-A- 6 010 237**
**US-A- 6 049 749**

- **LELEVE J: "AIDE A LA VISION" INGENIEURS DE L'AUTOMOBILE, RAIP. BOULOGNE, FR, no. 740, October 2000 (2000-10), pages 94-97, XP000959807 ISSN: 0020-1200**
- **THIEMANN M ET AL: "NEUE KONZEPTE DER AUTOMATISCHEN LEUCHTWEITEREGELUNG AUF BASIS EINESINNOVATIVEN, INDUKTIVEN DREHWINKEL-SENSORS" ATZ AUTOMOBILTECHNISCHE ZEITSCHRIFT, FRANCKH'SCHE VERLAGSHANDLUNG. STUTTGART, DE, vol. 100, no. 11, November 1998 (1998-11), pages 820-822,824, XP000782801 ISSN: 0001-2785**
- **TOOP C: "DYNAMISCHE LEUCHTWEITEREGELUNG" ATZ AUTOMOBILTECHNISCHE ZEITSCHRIFT, FRANCKH'SCHE VERLAGSHANDLUNG. STUTTGART, DE, vol. 95, no. 9, 1 September 1993 (1993-09-01), pages 466-469, XP000390506 ISSN: 0001-2785**
- **HOGREFE H ET AL: "IMPROVING SAFETY THROUGH ADAPTIVE FORWARD LIGHTING" AUTOMOTIVE ENGINEERING, SOCIETY OF AUTOMOTIVE ENGINEERS. WARRENDALE, US, vol. 105, no. 10, October 1997 (1997-10), pages 47-51, XP000722058 ISSN: 0098-2571**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a headlight system, preferably for motor vehicles, comprising lighting units on the right hand side and the left hand side of a vehicle, whereby at least one lighting unit is provided with a horizontal movement feature of the low beam and/or high beam light, which headlight system emits the low beams and the high beams of light, which beams are of adaptive or variable luminous intensity, which luminous intensity is derived of the vehicle speed, the steering wheel position and/or of a navigation system signal so that the road illumination can be varied continuously or discretely. At low vehicle speed, the width of the low light beams is maximal and their integral range determining the illuminated visibility distance is minimal. This mode of illumination is determined to be used preferably when riding in a town or on a serpentine road, for example in a mountainous terrain. At the medium vehicle speed, for example when the vehicle is riding on country or district roads, the width of the light beams and their reach are set to medium values. On speedy roads for motor vehicles-motorways and on highways, when the vehicle speed is maximal, the road illumination is set so that the range of the low beams is the longest, and contrary to it, the width of the light beams is at its smallest value.

The headlight system on the left hand side and that on the right hand side of the vehicle comprise one or more lighting units, whereby at least one lighting unit on each side of the headlight system is continuously and/or discretely vertically and horizontally movable, whereby its horizontal movement feature is controlled by movement or position of the steering wheel and/or a signal of a navigation system anticipating the future change in vehicle movement direction and the magnitude of such change. The vertical movement feature is controlled by sensors of vehicle body inclination and by a controlling unit, whereby, an automatic levelling of the headlight beam range in accordance with the static changes of vehicle load and/or dynamic changes of the longitudinal vehicle body inclination during a ride on a real road, and also by a sensor of speed, which sensor carries out an extension of the low beam lights range, for example in case of a ride on motorways.

At least one lighting unit on each side of the lighting system contributes also to the high beam light and for example can be of projector type provided with bifunctional optics.

The prior art adaptive headlight systems employ the principle consisting in that a lighting unit, provided or not provided with the feature of a parallel movement, serves as the basic lighting unit. This basic lighting unit is completed by another one, which is mostly fixed and of the cornering or front fog type. This complementary lighting unit is switched on by turning the steering wheel and by a direction indicator switch only on one side of the headlight system or in discrete mode by a speed sensor on both sides of the headlight system. Precisely, the discrete nature of the mode of operation of the lighting units is a disadvantage of this solution, as under certain circumstances, the so controlled lighting units can confuse other road traffic participants by their virtual signalling function due to a sudden change in light emitting surfaces of the lighting units on one or both sides of the vehicle front part. US-A-6010237 discloses a headlight system, whereby the headlights on both sides are swung in the same direction by the same angle. Other adaptive headlight systems change only geometry of the cut-off between light and darkness of the low beam headlights at that vehicle side which is nearer to the closest road kerb, usually discretely. Apart from the discreteness of their function, a disadvantage of such systems is that the light beam on both sides of the headlight system is of little or non-adaptive both with regard to the light concentration in front of the vehicle at high speeds and the spread out of light beams to the sides at low vehicle speeds.

The present invention relates to a headlight system, for a motor vehicle travelling on a road having a central line (SC) and nearer road verge (BOV), comprising a lighting unit on the right hand side and the left hand side of a vehicle, whereby at least one lighting unit on each side is provided with a horizontal movement of a low beam and/or a high beam light the optical axis of said lighting unit of said vehicle headlight system on the left hand side (SSLS) is arranged to diverge by an angle ($\alpha_1$) in the horizontal plane from the longitudinal vehicle axis (X) in the direction to the central line (SC), or for medium or high vehicle speeds alternatively in the direction to the nearer road verge (BOV), and the optical axis of said lighting unit of said vehicle headlight system on the right hand side (SSPS) is arranged to diverge by an angle ($\alpha_2$) in the horizontal plane with said longitudinal vehicle axis (X) in the direction to the nearer road verge (BOV), wherein said angles ($\alpha_1$, $\alpha_2$) are given by a linear or a non-linear relation to the vehicle speed (V) and the sizes of said angles ($\alpha_1$, $\alpha_2$) are, for a low to zero vehicle speed ($V_{min}$, V=0), maximal ($\alpha_{1max}$, $\alpha_{2max}$) and, for a maximum vehicle speed ($V_{max}$), they are minimal ($\alpha_{1min}$, $\alpha_{2min}$) to zero ($\alpha_1 = 0$, $\alpha_2 = 0$). Reasons why this horizontal movement is not parallel is given by the fact that the optical axis of the lighting unit of the headlight system on the road central line side is directed to this road central line and the optical axis of the lighting unit on the side which is closer to the near road kerb, is directed to this near road kerb. Alternatively, the optical axis of the lighting unit of the headlight system close to the road central line side can be deflected non-parallelly at the medium and the high speeds also to the near road kerb.

This basic deflection is zero for the high beam and the beam is further modulated by swivelling what is a parallel change of the horizontal light beams orientation in relation to the steering wheel position and/or in relation to the navigation system signal.

The horizontal movement providing lighting units of the headlight system situated on both sides of a vehicle can be complemented by lighting units without this movement feature, whereby, such complementary lighting units can have a limited foreground at the bottom line of the low beam.

Lighting units with a horizontal movement feature and/or lighting units without a horizontal movement feature are provided with a vertical movement feature for an automatic levelling of the low beam lights range according to a change of the vehicle body position produced by a change of vehicle load, what is a static levelling and/or as a consequence of ride on a real road, what is a dynamic levelling. Apart from this, this vertical movement feature will carry out an extension of the low beam light range by shifting up of the above mentioned lighting units at high vehicle speed. In case of the high beam light, the shift up of the lighting units will be even higher so that the zone of maximal luminous intensity of the high beam lights is projected at the level of the horizontal line of the driver's working space.

The lighting units with a horizontal movement feature have their cut-off between light and darkness of the low beam light on the side of the closer road kerb in the lower position than what is the position of this cut-off of such lighting units that are without a horizontal movement feature, whereby, this cut-off between light and darkness of the low beam light of the lighting unit with horizontal movement closer to the road central line is also placed lower than the lighting unit with a horizontal movement feature on the side of the closer road kerb.

Also, the horizontally movable lighting units can be of the bifunctional type, in which case they emit both the low beam and the high beam lights and all above mentioned units can be of projector type.

When the high beam lights are switched on, the lighting units with a horizontal movement feature will deflect from the reference position of the low beam lights horizontally towards the road central line so that the maximum luminous intensity is projected on the vertical line.

The present invention in its various aspects will now be described with reference to attached drawings, in which:

Figure 1 is a front view of a vehicle provided with a headlights system according to this invention.
Figure 2 shows a top view of a vehicle on a standard road.
Figure 3 shows low beam lights of individual lighting units.
Figure 4 shows a projection of low beam lights of a headlight system, which system is closer to the road central line for zero vehicle speed, and Figure 5 shows the same projection but for the maximal vehicle speed.
Figure 6 shows a projection of the low beam lights of a headlight system on the side which is closer to the road kerb for the zero vehicle speed, and
Figure 7 is the same projection but for the maximal vehicle speed.

Figure 8 shows the projection of high beams for a headlight system without any swivelling and
Figure 9 shows this projection, but for a headlight system with swivelling.

A particularly preferred embodiment of the present invention is described below.

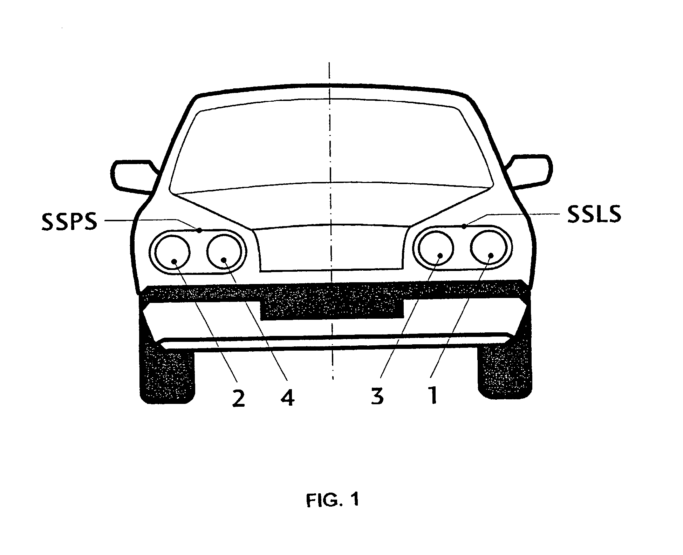

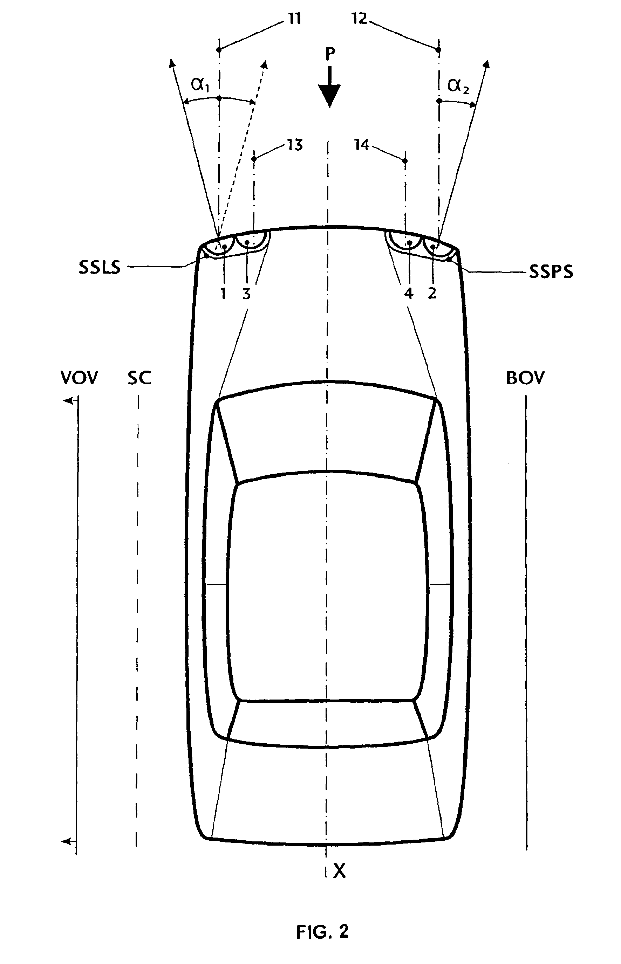

Figure 1 shows a front view in the direction $\underline{P}$ from Figure 2 of a vehicle provided with a headlight system according to the present invention. Said headlight system comprises a right side headlight system $\underline{SSPS}$ and a left side headlight system $\underline{SSLP}$. Said systems are provided with horizontally movable lighting units $\underline{1}$ and $\underline{2}$ respectively and the fixed headlight units $\underline{3}$ and $\underline{4}$ respectively that are horizontally immovable.

Figure 2 shows this vehicle in bird's view placed on a standard road of which road the nearer roadside $\underline{BOV}$, the central line $\underline{SC}$ and the more distant roadside $\underline{VOV}$ are shown. Optical axes $\underline{11}$ and $\underline{12}$ respectively of said lighting units $\underline{1}$ and $\underline{2}$ respectively of said right side headlight system $\underline{SSPS}$ and said left side headlight system $\underline{SSLS}$ respectively form angles $\underline{\alpha_1}$ and $\underline{\alpha_2}$ respectively with the longitudinal axis $\underline{x}$ of the vehicle. Sizes of said angles $\underline{\alpha_1}$ and $\underline{\alpha_2}$ are determined by a linear or a non-linear function of the vehicle speed $\underline{V}$. The sizes of said angles $\alpha_1$ and $\alpha_2$ respectively are equal to values $\underline{\alpha_{1max}}$ and $\underline{\alpha_{2max}}$ respectively at low vehicle speed $V_{min}$ or at zero vehicle speed $\underline{V=0}$, and at the maximum vehicle speed $\underline{V_{max}}$ sizes of said angles $\alpha_1$ and $\alpha_2$ respectively are equal to values $\underline{\alpha_{1min}}$ and $\underline{\alpha_{2min}}$ respectively or to zero.

$$\alpha_{1/}\alpha_2 = \alpha_{1max}/\alpha_{2max} \; ;$$
$$V_{min}/V = 0 \; ;$$

$$\alpha_1/\alpha_2 = \alpha_{1min}/\alpha_{2min} \; ;$$
$$\alpha_1/\alpha_2 = 0 \; .$$

By this arrangement, a basic wide horizontal spread out of low beam lights and a reduced concentration of light flow into the road space around the road central line $\underline{SC}$ at low vehicle speed is obtained. On the other side, at high speeds, said low beams light flux is concentrated in the space of the road central line $\underline{SC}$. This allows a more safe vehicle approach to crossings and sharp turns on one side and an increased range of the low beam lights at high vehicle speeds on the other side.

Apart from this basic horizontal deflection of the light emitted by said lighting units $\underline{1}$ and $\underline{2}$, additionally, said lighting units $\underline{1}$ and $\underline{2}$ are horizontally rotated by a swivelling which changes the horizontal position of said lighting units $\underline{1}$, $\underline{2}$ according to turning of the steering wheel and/or navigation system signal. Therefore, the actual position of horizontal rotation is obviously the sum of the basic horizontal deflection of said lighting units 1, 2 and the horizontal rotation produced by said swivelling. The advantage of the navigation system correction signal application is that the vehicle movement direction change and its magnitude are anticipated so that said lighting units 1 and 2 are rotated into the required direction sooner than the vehicle starts to turn.

The horizontally movable lighting units 1 and 2 of the headlight system and/or horizontally immovable lighting units 3, and 4 are provided with the vertical movement feature controlled by an automatic low beam light levelling/stabilisation system controlling the range of low beam lights in relation to the longitudinal changes of the vehicle body position caused by changes in load or by dynamic changes during vehicle movement on a real road. At high vehicle speeds $V_{max}$, said range is extended and said lighting units 1, 2, 3, 4 are shifted up so that the zone of maximum luminous intensity of the high beam lights is projected at the level of the H-H horizontal line .

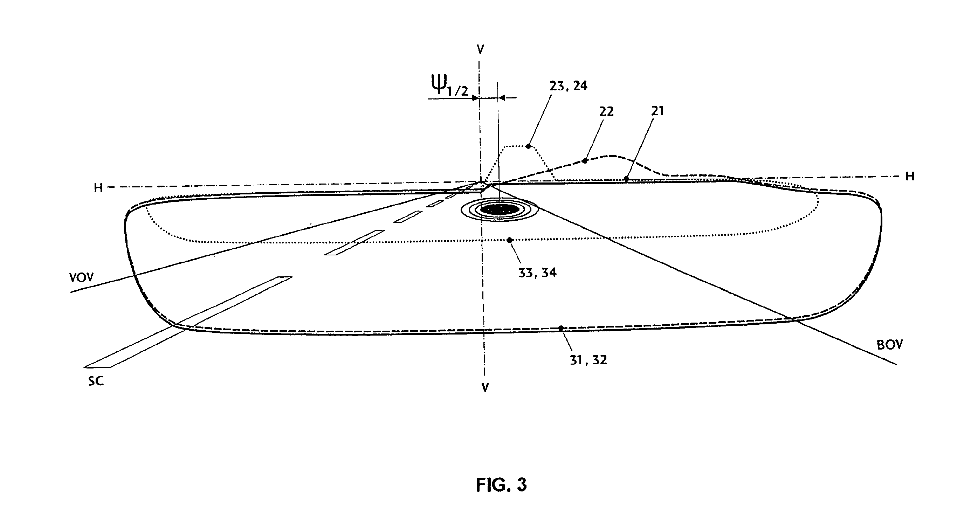

Figure 3 shows in perspective projection of a road the geometry of the low beam lights system according to the present invention. Below the horizontal line H-H, between the central line SC and the more distant road kerb VOV, the horizontal part of the light and darkness cut-off is placed and beyond the vertical line V-V, the asymmetric part of this light and darkness cut-off is placed. The headlight system on the left hand side SSLS and that on the right hand side SSPS are provided with horizontally immovable lighting units 3 and 4 respectively that produce a limited illuminated foreground at the bottom lines 33 and 34 respectively of the low beam lights. Thereby, it is understood that said lines 33 and 34 respectively are placed closer to the horizontal line H-H. An advantage of said limited foreground is that reduces the glare of the oncoming traffic drivers by light refraction on road, particularly if the road surface is wet and its refractivity is increased thereby. Another advantage is an improved longitudinal harmonisation of the road illumination when the light flux is concentrated into the area of greater visibility distances, whereby the adaptation luminance and the resolution threshold of luminance contrast is decreased, whereby, the visibility distance and the safe vehicle speed is increased.

The horizontally movable lighting units 1 and 2 respectively produce the cut-off 21 and 22 respectively, between light and darkness of the low light beams on the side of the closer road kerb BOV lifted less then what is the position of the cut-off 23 and 24 respectively between light and darkness of the low beam lights of the horizontally immovable lighting units 3 and 4 respectively, whereby, for said lighting unit 1 of the lighting system situated on the side closer to the road central line SC this boundary 21 is placed lower than the boundary 22 between light and darkness of the low beam light of the lighting unit 2 situated on the side of the closer road kerb BOV.

Lighting units 1 and 2 respectively can be of bifunctional type and emit both the low beam lights and the high beam lights. An advantage of this solution is the fact that also the high beam lights exhibit a horizontal movement based on the swivelling. All lighting units 1, 2, 3 and 4 can be of the projector type in which case the cut-off between light and darkness is created by projection of the contrast of luminance of a dark internal shield on an illuminated background of a reflector by a condensor lens into the road space. An advantage of the projector units is a significantly less dazzling luminous intensity above the horizontal H-H and that it is relatively easy to realize the bifunctional optics so that a swap from the high beam light to the low beam light can be managed easily for example by the rotation of the said internal shields in the bifunctional system.

After switching over to the high beam light, the horizontally movable lighting units 1 and 2 decline from the reference positions of the low beam lights horizontally to the road central line SC by an angle $\psi$,

$$\psi = actg\ (0{,}002 \div 0{,}05)$$

that is, $\psi$ is arctg(0.002) to arctg(0.05), whereby the ratio between the axial and maximal luminous intensities of the high beam light is improved as the zone of its maximum luminous intensity, originally asymmetrically declined in the low beam light mode to the closer roadside BOV, is now projected on the vertical line V-V.

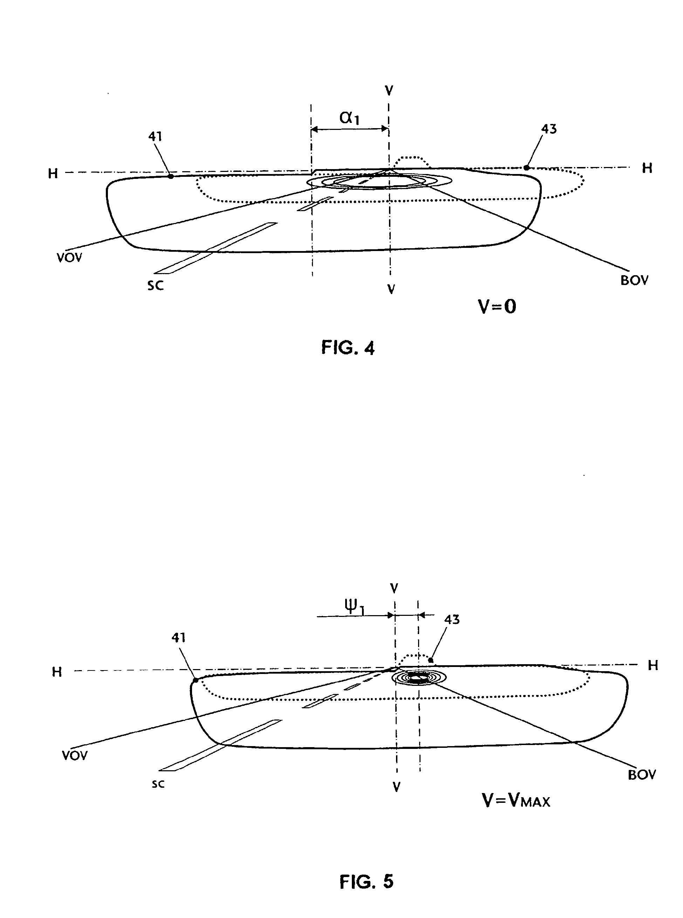

Figures 4 and 5 show low beam lights 41 and 43 respectively of a headlight system on the left hand side SSLS, whereby, Figure 4 represents said beams at the minimal vehicle speed $V_{min}$, when this basic spread out of angle $\alpha_1$ of the lighting unit 1 is maximal and Figure 5 shows this situation at the maximal vehicle speed $V_{max}$ when this spread out of angle $\alpha_1$ is zero.

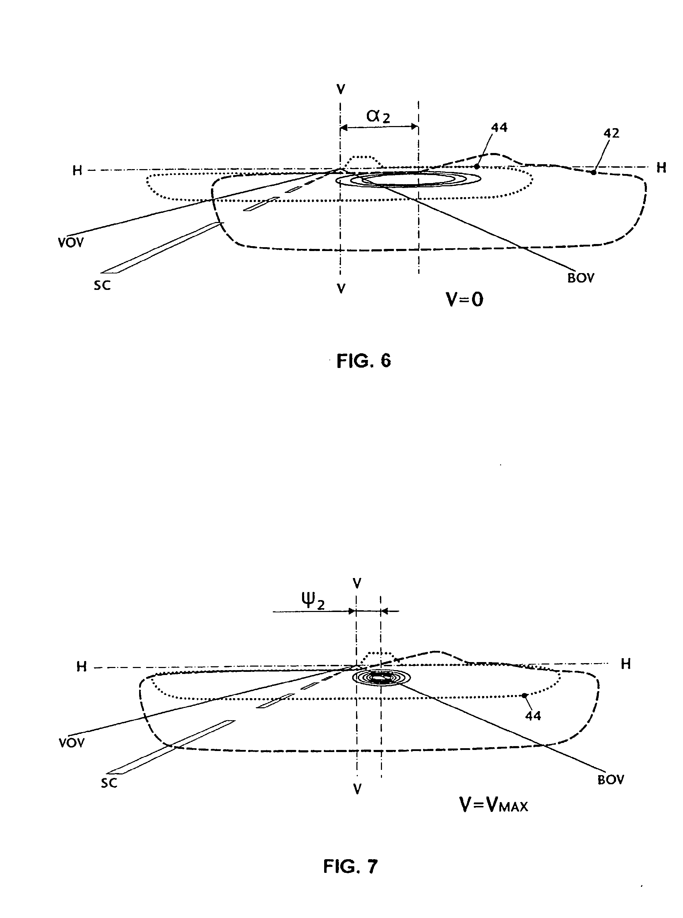

Figures 6 and 7 show beams 42 and 44 respectively of low beam lights of a headlight system on the right hand side SSPS for the same traffic situations as are those of Figures 4 and 5.

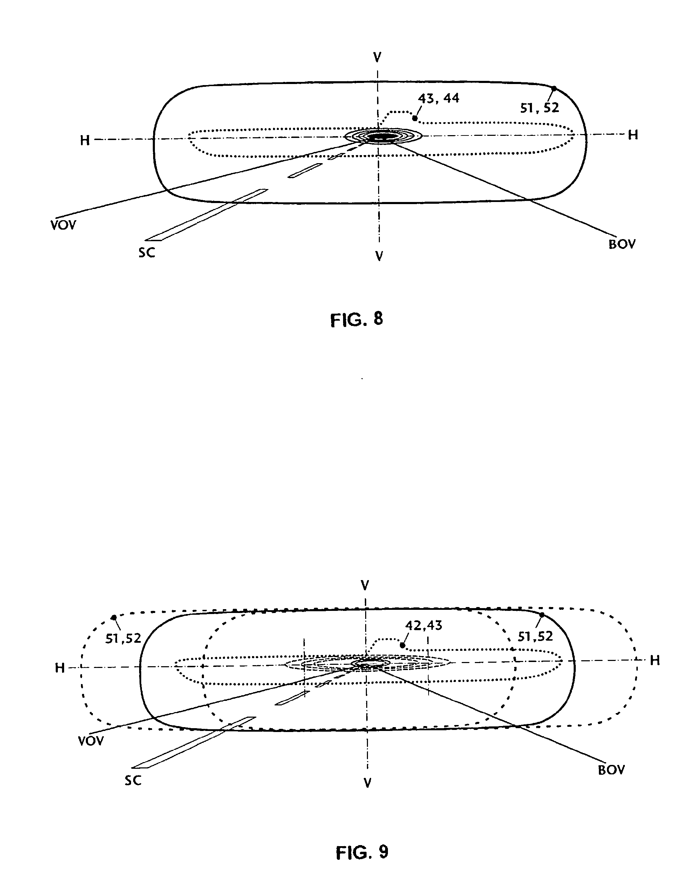

Figure 8 shows high beam lights 43 and 51 respectively of the headlight system without swivelling.

Figure 9 shows high beam lights 44 and 52 respectively of the headlight system with swivelling, whereby, the dashed lines show the side limit positions of light beams that are parallelly declined off the vertical line V-V by the said swivelling.

An advantage of the above mentioned headlight system for motor vehicles is its high adaptability, which adaptability is based on variability of the low beam light width in relation to the speed and the change of the vehicle direction movement and on significant change in road luminance, especially for higher distances, according to vehicle speed. The basic deflection of the low beam lights is additively modulated also by swivelling and said deflection is equal to zero in case of the high beam lights, what corresponds to the requirement to maximize the range of said high beam lights.

## Claims

1.  A headlight system for a motor vehicle travelling on a road having a central line (SC) and a nearer road verge (BOV), comprising a lighting unit on the right hand side and on the left hand side of a vehicle, whereby at least one lighting unit (1,2) on each side is provided with a horizontal movement of a low beam light and/or a high beam light, **characterised in that** the optical axis (11) of said lighting unit (1) of said vehicle headlight system on the left hand side (SSLS) is arranged to diverge by an angle ($\alpha_1$) in the horizontal plane from the longitudinal vehicle axis (X) in the direction to the central line (SC), or for medium or high vehicle speeds alternatively in the direction to the nearer road verge (BOV), and the optical axis (12) of said lighting unit (2) of said vehicle headlight system on the right hand side (SSPS) is arranged to diverge by an angle ($\alpha_2$) in the horizontal plane with said longitudinal vehicle axis (X) in the direction to the nearer road verge (BOV), wherein said angles ($\alpha_1$, $\alpha_2$) are given by a linear or a non-linear relation to the vehicle speed (V) and the sizes of said angles ($\alpha_1$, $\alpha_2$) are, for a low to zero vehicle speed ($V_{min}$, V = 0), maximal ($\alpha_{1max}$, $\alpha_{2max}$) and, for a maximum vehicle speed ($V_{max}$), they are minimal ($\alpha_{1min}$, $\alpha_{2min}$) to zero ($\alpha_1 = 0$, $\alpha_2 = 0$).

2.  A headlight system of Claim 1, **characterized in that** said actual angle in the horizontal plane of the optical axes (11, 12) of said lighting units (1, 2) given by vehicle speed (V) is additionally arranged to be modulated by swivelling, which changes said angle in the horizontal plane of said lighting units (1, 2) according to the turning of the vehicle steering wheel and/or navigation system signal.

3.  A headlight system of Claims 1 or 2 **characterized in that** said lighting units (1, 2) of said headlight system provided with a horizontal movement feature and/or said lighting units (3, 4) without a horizontal movement feature are provided with a vertical movement feature of an automatic adjustment or stabilisation of the low beam light range in relation to the longitudinal changes of the vehicle body position as a consequence of vehicle load change or of their dynamic changes during movement of said vehicle on a real road for extension of said range at high vehicle speed ($V_{max}$) and for shifting up said of light units (1, 2, 3, 4) to project the zone of maximal luminous intensity of high beam lights in the horizontal (H-H).

4.  A headlight system of Claims 1 to 3 **characterized in that** said left hand side headlight system (SSLS) is provided with said horizontally immovable left hand lighting unit (3) and said right hand side headlight system (SSPS) is provided with said horizontally immovable right hand lighting unit (4), which systems (SSLS, SSPS) produce limited illumination of the foreground below of the bottom lines (33, 34) of said low beam lights.

5.  A headlight system of Claims 1 to 4 **characterized in that** said lighting units (1, 2) provided with a horizontal movement feature have cut-off (21, 22) between light and darkness of said low beam light at the side which is closer to the roadside (BOV) lifted lower than what is the position of the cut-off (23, 24) between light and darkness of the low beam light of said lighting units (3, 4) without a horizontal movement feature, whereby, said cut-off (21) for lighting unit (1) on the side of said lighting system which is closer to the road central line (SC) is situated lower than said cut-off (22) of light and darkness of said low beam light of said lighting unit (2) at the side which is closer to the road kerb (BOV).

6.  A headlight system of Claims 1 to 5 **characterized in that** said lighting units (1, 2) with a horizontal movement feature are of bifunctional type emitting both said low beam and said high beam lights.

7.  A headlight system of Claims 1 to 6 **characterized in that** said lighting units (1, 2) with a horizontal movement feature and/or lighting units (3, 4) without a horizontal movement feature are of projector type.

8.  A headlight system of Claims 1 to 7 **characterized in that** after having been switched to the high beam lights, said lighting units (1, 2) with a horizontal movement feature are declined off the reference position of said low beam lights horizontally to a road central line (SC) forming an angles, $\psi$, whereby $\psi$ is arctg (0.002) to arctg(0.05).

## Patentansprüche

1.  Scheinwerferanlage für ein auf einer Straße fahrendes Kraftfahrzeug mit einer zentralen Linie (SC) und einem näheren Straßenrand (BOV), die eine Beleuchtungseinheit auf der rechten Seite und auf der linken Seite eines Fahrzeugs umfasst, wodurch mindestens eine Beleuchtungseinheit (1,2) auf jeder Seite mit einer horizontalen Bewegung eines Abblendlichts und/oder Fernlichts versehen ist, **dadurch gekennzeichnet, dass** die optische Achse (11) der Beleuchtungseinheit (1) der Fahrzeugscheinwerferanlage auf der linken Seite (SSLS) eingerichtet ist, um einen Winkel ($\alpha_1$) in der horizontalen Ebene von der Längsachse (X) des Fahrzeugs in Richtung zur zentralen Linie (SC) oder für mittlere oder hohe Fahrzeuggeschwindigkeiten alternativ in Richtung des näheren Straßenrands (BOV) zu divergieren und die optische Achse (12) der Beleuchtungseinheit (2) der Fahrzeugscheinwerferanlage auf der rechten Seite (SSPS) ist eingerichtet um einen Winkel ($\alpha_2$) in der horizontalen Ebene mit der Längsachse (X) des Fahrzeugs in Richtung des näheren Straßenrands (BOV) zu divergieren, wobei die Winkel ($\alpha_1$, $\alpha_2$) durch eine lineare oder nichtlineare Beziehung zur Fahrzeuggeschwindigkeit (V) gegeben sind und die Größen der Winkel ($\alpha_1$, $\alpha_2$) sind, für eine niedrige bis null Fahrzeuggeschwindigkeit ($V_{min}$, V = 0), maximal ($\alpha_{1max}$, $\alpha_{2max}$) und für eine maximale Fahrzeuggeschwindigkeit ($V_{max}$), sind sie minimal ($\alpha_{1min}$, $\alpha_{2min}$) bis null ($\alpha_1 = 0$, $\alpha_2 = 0$).

2. Scheinwerferanlage nach Anspruch 1, **dadurch gekennzeichnet, dass** der tatsächliche Winkel in der horizontalen Ebene der optischen Achsen (11,12) der Beleuchtungseinheiten (1, 2), der durch die Fahrzeuggeschwindigkeit (V) gegeben wird, zusätzlich eingerichtet ist, durch Schwenken moduliert zu werden, was den Winkel in der horizontalen Ebene der Beleuchtungseinheiten (1,2) gemäß dem Drehen des Fahrzeuglenkrads und/oder dem Navigationssystemsignal ändert.

3. Scheinwerferanlage nach Ansprüchen 1 oder 2, **dadurch gekennzeichnet, dass** die Beleuchtungseinheiten (1,2) der Scheinwerferanlage, die mit einem horizontalen Bewegungsmerkmal versehen sind und/oder die Beleuchtungseinheiten (3, 4) ohne ein horizontales Bewegungsmerkmal mit einem vertikalen Bewegungsmerkmal einer automatischen Einstellung oder Stabilisierung der Abblendlichtreichweite, in Bezug auf die longitudinalen Veränderungen der Fahrzeugkarosserieposition versehen sind, d.h. als einer Folge der Fahrzeuglastveränderung oder ihrer dynamischen Veränderungen während Bewegung des Fahrzeugs auf einer wirklichen Straße zur Verlängerung der Reichweite bei hoher Fahrzeuggeschwindigkeit ($V_{max}$) und zur Verstellung der Beleuchtungseinheiten (1,2,3,4) nach oben, um die Zone der maximalen Leuchtintensität von Fernlichtscheinwerfern in die Horizontale (H-H) zu projizieren.

4. Scheinwerferanlage nach Ansprüchen 1 bis 3, **dadurch gekennzeichnet, dass** die linksseitige Scheinwerferanlage (SSLS) mit der horizontal unbeweglichen linken Beleuchtungseinheit (3) versehen ist und die rechte Scheinwerferanlage (SSPS) mit der horizontal unbeweglichen rechten Beleuchtungseinheit (4) versehen ist, welche Anlagen (SSLS, SSPS) begrenzte Beleuchtung des Vordergrunds unterhalb der unteren Linien (33,34) der Abblendlichtleuchten produzieren.

5. Scheinwerferanlage nach Ansprüchen 1 bis 4, **dadurch gekennzeichnet, dass** die Beleuchtungseinheiten (1,2), die mit einem horizontalen Bewegungsmerkmal versehen sind, Abgrenzung bzw."Cut-off "(21, 22) zwischen Helligkeit und Dunkelheit des Abblendlichts auf der Seite, die näher zum Straßenrand ist (BOV) niedriger angehoben haben, als die Position der Abgrenzung (23,24) zwischen Helligkeit und Dunkelheit des Abblendlichts der Beleuchtungseinheiten (3,4) ohne ein horizontales Bewegungsmerkmal, wodurch die Abgrenzung (21) für die Beleuchtungseinheit (1) auf der Seite der Beleuchtungsanlage, die näher der Straßenmittellinie (SC) ist, niedriger gelegen ist als die Abgrenzung (22) von Helligkeit und Dunkelheit des Abblendlichts der Beleuchtungseinheit (2) auf der Seite, die dem Straßenrand (BOV) näher ist.

6. Scheinwerferanlage nach Ansprüchen 1 bis 5, **dadurch gekennzeichnet, dass** besagte Beleuchtungseinheiten (1,2) mit einem horizontalen Bewegungsmerkmal des Typs mit Doppelfunktion sind und sowohl besagtes Abblendlicht als auch besagtes Fernlicht emittieren.

7. Scheinwerferanlage nach Ansprüchen 1 bis 6, **dadurch gekennzeichnet, dass** besagte Beleuchtungseinheiten (1,2) mit einem horizontalen Bewegungsmerkmal und/oder die Beleuchtungseinheiten (3,4) ohne ein horizontales Bewegungsmerkmal des Projektortyps sind.

8. Scheinwerferanlage nach Ansprüchen 1 bis 7, **dadurch gekennzeichnet, dass**, nach dem Schalten auf Fernlicht, besagte Beleuchtungseinheiten (1,2) mit einem horizontalen Bewegungsmerkmal von der Bezugsposition der besagten Abblendlichtleuchten weg horizontal auf eine Straßenmittellinie (SC) geneigt werden und einen Winkel, $\Psi$, bilden, wobei $\Psi$ ist arctg (0,002) bis arctg (0,05) ist.

**Revendications**

1. Système de phare pour un véhicule à moteur se déplaçant sur une route ayant une ligne centrale (SC) et un accotement de route plus proche (BOV), comprenant un bloc d'éclairage sur le côté droit et sur le côté gauche du véhicule, par lequel au moins un bloc d'éclairage (1,2) sur chaque côté est équipé avec un mouvement horizontal d'un feu de croisement et/ou d'un feu de route, **caractérisé en ce que** l'axe optique (11) dudit bloc d'éclairage (1) dudit système de phare de véhicule sur le côté gauche (SSLS) est disposé pour se dévier d'un angle ($\alpha_1$) dans le plan horizontal de l'axe longitudinal du véhicule (X) en direction de la ligne centrale (SC), ou alternativement pour les vitesses de véhicule moyenne ou haute en direction de l'accotement de route plus proche (BOV), et l'axe optique (12) dudit bloc d'éclairage (2) dudit système de phare de véhicule sur le côté droit (SSPS) est disposé pour se dévier d'un angle ($\alpha_2$) dans le plan horizontal de l'axe longitudinal du véhicule (X) en direction de l'accotement de route plus proche (BOV), dans lequel lesdits angles ($\alpha_1$, $\alpha_2$) sont donnés par une relation linéaire ou non linéaire à la vitesse de véhicule (V) et les tailles desdits angles ($\alpha_1$, $\alpha_2$) sont, pour une vitesse de véhicule allant de basse à zéro ($V_{min}$, V = 0), maximales ($\alpha_{1max}$, $\alpha_{2max}$) et, pour une vitesse de véhicule maximale ($V_{max}$), elles sont de minimales ($\alpha_{1min}$, $\alpha_{2min}$) à zéro ($\alpha_1 = 0$, $\alpha_2 = 0$).

2. Système de phare selon la revendication 1, **caractérisé en ce que** ledit angle actuel dans le plan horizontal des axes optiques (11,12) desdits blocs d'éclairage (1,2) donné par la vitesse de véhicule (V) est en outre prévu pour être modulé par pivotement, ce qui change ledit angle dans le plan horizontal desdits blocs d'éclairage (1,2) selon le degré de braquage du volant de direction du véhicule et/ou un signal du système de navigation.

3. Système de phare selon la revendication 1 ou 2, **caractérisé en ce que** lesdits blocs d'éclairage (1,2) dudit système de phare équipé avec un élément de mouvement horizontal et/ou lesdits blocs d'éclairage (3,4) sans un élément de mouvement horizontal, sont équipés avec un élément de mouvement vertical d'ajustement ou de stabilisation automatique de la portée du feu de croisement en relation avec les changements longitudinaux de la position de la carrosserie du véhicule en conséquence du changement de la charge du véhicule ou de ses changements dynamiques pendant le mouvement dudit véhicule sur une route réelle pour l'extension de la dite portée à haute vitesse de véhicule ($V_{max}$) et pour changer vers le haut lesdits blocs d'éclairage (1,2,3,4) pour projeter la zone d'intensité lumineuse maximale des feux de route dans l'horizontale (H-H).

4. Système de phare selon les revendications 1 à 3, **caractérisé en ce que** ledit système de phare de véhicule de côté gauche (SSLS) est équipé avec ledit bloc d'éclairage de gauche horizontalement fixe (3) et ledit système de phare de véhicule de côté droit (SSPS) est équipé avec ledit bloc d'éclairage de droite horizontalement fixe (4), lesquels systèmes (SSLS, SSPS) produisent une illumination limitée du sol en avant en dessous des lignes de fond (33,34) desdits feux de croisement.

5. Système de phare selon les revendications 1 à 4, **caractérisé en ce que** lesdits blocs d'éclairage (1,2) équipés avec un élément de mouvement horizontal ont une coupure (21,22) entre la lumière et l'obscurité dudit feu de croisement sur le côté qui est plus près du bord de la route (BOV) levé plus bas que ce qui est la position de la coupure (23,24) entre la lumière et l'obscurité du feu de croisement dudit bloc d'éclairage (3,4) sans un élément de mouvement horizontal, au moyen duquel, ladite coupure (21) pour le bloc d'éclairage (1) sur le côté dudit système d'éclairage qui est plus près de la ligne centrale de la route (SC) est situé plus bas que ladite coupure (22) de lumière et obscurité dudit feu de croisement dudit bloc d'éclairage (2) sur le côté qui est plus près de la bordure de trottoir (BOV).

6. Système de phare selon les revendications 1 à 5, **caractérisé en ce que** lesdits blocs d'éclairage (1, 2) avec un élément de mouvement horizontal sont du type bifonctionnel émettant à la fois lesdits feux de croisement et de route.

7. Système de phare selon les revendications 1 à 6, **caractérisé en ce que** lesdits blocs d'éclairage (1,2) avec un élément de mouvement horizontal et/ou blocs d'éclairage (3,4) sans un élément de mouvement horizontal sont du type projecteur.

8. Système de phare selon les revendications 1 à 7, **caractérisé en ce que** après avoir été commutés vers les feux de route, lesdits blocs d'éclairage (1,2) avec un élément de mouvement horizontal sont diminués horizontalement depuis la position de référence desdits feux de croisement vers une ligne centrale de la route (SC) formant un angle, $\psi$, dans lequel $\psi$ est arctangente (0,002) à arctangente (0,05).

FIG. 1

**FIG. 2**

FIG. 3

EP 1 234 717 B1

**FIG. 4**

**FIG. 5**

FIG. 6

FIG. 7

**FIG. 8**

**FIG. 9**